# EUROPEAN PATENT APPLICATION

(11) **EP 4 617 205 A1**
(43) Date of publication of application: **17.09.2025**
(21) Application number: 25162831.9
(22) Date of filing: 11.03.2025
(51) Int. Cl.: B65G 33/14, B65G 33/08, B65G 33/24, B65G 33/26

(54) **HEATING DEVICE FOR PLACEMENT IN A CENTRAL SHAFT OF A CONVEYOR SCREW AND CONVEYOR SCREW COMPRISING THE HEATING DEVICE**

(30) Priority: 12.03.2024 NL 2037224
(71) Applicant: Transportschroeven- en Machinefabriek van Beek B.V., 5151 DN Drunen (NL)
(72) Inventor: MULDER, Daan, 5141 GH Waalwijk (NL); VAN MOURIK, Michiel Noël, 5062 CP Oisterwijk (NL)
(74) Representative: Patentwerk B.V.

(57) **Abstract**

The present invention relates to a heating device for placement in a central shaft of a conveyor screw, wherein the heating device has an at least partly cylindrical shape and comprises a plurality of interconnected heating elements, arranged at an outer circumferential surface of the heating device; and an expansion mechanism, connected to at least two heating elements of the plurality of interconnected heating and located in between the at least two heating elements, and wherein the expansion mechanism is configured to increase a distance between the at least two heating elements. Optionally at least one heating element of the plurality of interconnected heating elements is a ceramic heating element, preferably wherein each heating element is a ceramic heating element.

## Description

The present invention relates to a heating device for placement in a central shaft of a conveyor screw, a conveyor screw, and a method for inserting a heating device in a conveyor screw.

A conveyor screw is a screw comprising a helical screw blade, or flighting, that is typically coiled around a central shaft of the conveyor screw. Conveyor screws are used in conveyor systems. Such conveyor systems typically comprise a housing wherein the conveyor screw is rotatable. The housing can for example be a hollow cylindrical tube or a trough. These screw conveyor systems are intended to transport a variety of different materials, for example granular material, molten material, fluids, etc. By clockwise rotating of the central shaft of the conveyor screw, and the helical screw blade attached thereto, material present in the trough is transported in a single direction towards one of the outer ends of the trough. Counter clockwise rotation of the shaft results in transport of the material in an opposite direction. Screw conveyor systems are particularly suited to transport materials from a first position to a second position, wherein the second position is elevated with respect to the first position, due to efficient use of energy by these systems. The orientation of the conveyor screw within a screw conveyor system can range from horizontal to inclined, up to a maximum inclination of 90° (i.e. a vertical orientation). A clearing between an outer surface of the trough and an outer circumferential area of the helical screw blade, furthest removed from the shaft, should be as small as possible to prevent any material from remaining behind in the clearing while the conveyor screw rotates. **If** there is no clearing or insufficient clearing, friction between the helical screw blade and the trough occurs, increasing energy usage and increasing the risk of damaging the trough, the conveyor screw, or both.

The housing of a screw conveyor can be heated to maintain or increase a temperature of conveyed material present in the tube or through. A suitable option to heat a tube or through is to pump a heat transfer fluid through piping or other chambers surrounding the surface of the tube opposite to a side of the through adjacent to an outer edge of the helical screw blade. Likewise, it is possible to cool the conveyed material by pumping a cooled heat transfer medium through the piping.

Heating only the housing can result in a temperature gradient being created in conveyed material. A temperature of the material near the housing can be close to the temperature of the housing itself, while a temperature of the material near the shaft of the conveyor screw can be markedly lower. This inhomogeneous temperature of conveyed material is often undesirable. In addition, heating conveyed material via only the housing may not be sufficient to achieve a required elevated temperature of the conveyed material, in particular when a heat transfer coefficient of the material is low (i.e. when the material is a good isolator). To prevent formation of a temperature gradient, or to at least minimize the temperature gradient, it is advantageous to heat both the housing and the conveyor screw itself. This ensures that conveyed material is heated from two opposite sides, preventing or reducing the formation of a temperature gradient in the conveyed material.

The shaft of a conveyor screw can have a hollow compartment. To heat the conveyor screw, heat transfer fluid can be pumped through this hollow compartment. There are however several disadvantages associated with heating the conveyor screw with heat transfer fluid in general. A first disadvantage is that the maximum temperature that can be achieved with thermic oil, a commonly applied heat transfer fluid, is in practice limited to approximately 290 °C. This implies that the temperature of conveyed material is typically not elevated beyond 290 °C, while this is desired for applications such as pyrolysis, which requires a temperature above 300 °C. Higher temperatures are achievable with thermic oil, but are not desirable, due to rapid aging and degradation of the thermic oil at temperatures above approximately 300 °C. A second disadvantage is that due to transport of heat transfer fluid by e.g. pumps, and due to thermal expansion, the heat transfer fluid is pressurized. In practice, this implies that piping, tubing, connection elements, and other component wherein the heat transfer fluid circulates, should be able to withstand both elevated pressure and elevated temperature. Such pressure and temperature resistant components are more expensive than regular components. Thirdly, due to this elevated temperature, and due to rotatable couplings allowing parts of the piping and tubing to rotate with respect to other parts, a heat transfer fluid circulation system is prone to leak.

Leakage of heat transfer fluid into conveyed material can be particularly detrimental if the conveyed material is a food product. The heat transfer fluid can contaminate the food product, and spoil an entire batch of food. A fourth disadvantage is that the temperature of the tube or trough, as well as the temperature of the shaft of the conveyor screw, are difficult to control. There is significant lag between heating of the heat transfer fluid via an external heater, pumping the heat transfer fluid via piping, tubing and couplings to the trough or to the shaft of the conveyor screw, and finally transferring heat from the heat transfer fluid into the conveyed material. This lag complicates efficient and reactive control over the temperature of the conveyed material. In addition, control over temperature of different parts of both the conveyor screw as well as the housing is difficult for the reasons above. A fifth disadvantage is that a loss of energy occurs due to an energy conversion of gas or electricity to a heated heat transfer fluid. Additional losses of energy occur due to heat exchange of the heat transfer fluid and its surroundings while the fluid is pumped trough piping, tubing and couplings, prior to the fluid reaching either the housing or the shaft.

In order to overcome the disadvantages as given above, it is possible to use electrical heating elements inside the shaft of a conveyor screw, as well as near an outer surface of a trough or tube, wherein the conveyor screw is rotatable. Energy loss in electrical wiring is insignificant, and the conversion of electrical energy into heat occurs at the desired location. As such, there is hardly any energy loss due to transport. To electrically heat a conveyor screw, there are several options. A first option is to insert a spiral-shaped heating element in a hollow shaft of a conveyor screw. Electricity is supplied to the heating element via a slip ring, allowing rotation of the conveyor screw with respect to the other parts of a screw conveyor system. Such a large spiraled heating element is however difficult to insert in a hollow shaft. Moreover, the heating element is prone to burning out, and temperature is difficult to regulate. A second option is to insert multiple rod-shaped heating elements in the shaft. Such elongated heating elements are easier to insert in a shaft, but are still prone to damage upon insertion, in particular with conveyor screws that have a length of several meters.

Another advantage of spiral shaped heating elements and rod-shaped heating elements, is that a thermally conductive medium such as a powder or paste is required to effectively transfer heat from the heating element to the shaft. The space surrounding the heating elements inside the shaft should thus be filled with such a thermally conductive medium. **If** a thermally conductive medium is omitted, the heating elements are prone to burning out, as heat cannot be transferred away from the heating elements, and as such accumulates. Further, efficient temperature control is not possible, due to a lag in transfer of heat between the heating elements and the shaft. It is also not possible to control a temperature of different parts, or zones, of the shaft independently using the heating elements as outlined above.

Finally, the requirement of a thermally conductive medium, as well as the sheer size and shape of the heating elements, complicates replacement of a heating elements to a large degree. **If** a broken rod-shaped heating element is removed from the shaft, inserting a new intact rod-shaped heating element in the shaft is nearly impossible due to the presence of the thermally conductive medium blocking the insertion of the heating element in the shaft. As a result, all of the heating elements and conductive medium typically needs to be removed from the shaft prior to inserting new heating elements and conductive medium. Therefore, replacement of heating elements within the shaft of a conveyor screw is a complicated endeavor.

It is therefore an object of the present invention to provide a heating device for placement in a conveyor screw that is easily replaceable, and that allows efficient control over the conveyor screw temperature at different zones of the conveyor screw.

The invention provides for these purposes a heating device for placement in a central shaft of a conveyor screw, wherein the heating device has an at least partly cylindrical shape and comprises a plurality of interconnected heating elements, arranged at an outer circumferential surface of the heating device; and an expansion mechanism, connected to at least two heating elements of the plurality of interconnected heating and located in between the at least two heating elements, and wherein the expansion mechanism is configured to increase and/or decrease a distance between the at least two heating elements and/or a diameter of the device. This allows the device to be insertable into a shaft without the need for a heat transfer medium between an outer surface of the device and the inner surface of the shaft. The expansion mechanism is preferably resilient for allowing a resilient increase or decrease between the heating elements, in particular a diameter of the device. The expansion mechanism is configured to allow the heating device to move from a compressed state, wherein an outside diameter of the heating device is smaller, in particular smaller than an inside diameter of a hollow compartment of a shaft of a conveyor screw, to an expanded state, wherein an outside diameter of the heating device is larger than the compressed state, in particular equal to or larger than an inside diameter of the hollow compartment. In the compressed state, the heating device can be slid into the hollow compartment. Once the heating device is at a desired position in the hollow compartment, it can be expanded, such that each heating element of the plurality of heating elements abuts an inner surface area of the shaft. Not only does this fix the heating device in place, preventing the heating device from moving within the hollow compartment, but it also effectively allows omitting the use of a conductive medium to increase effective heat transfer between the heating elements and the conveyor screw, because the heating elements are pushed against the inner surface area of the shaft towards the outside of the hollow compartment. As defined herein, a heating element may also be capable of reducing a temperature of a shaft wherein the heating device is inserted, to provide a cooling effect to the conveyor screw.

Preferably, the heating device comprises an outer contacting surface, wherein at least a portion of said contacting surface is configured for establishing a friction based contact with an inner surface of a central shaft of a conveyor screw. The outer surface is configured for directly contacting the inner surface of the shaft. Hence, there is no additional medium, such as heat transfer paste, required between the outer surface of the device and the inner surface of the shaft. The outer surface may be formed by the outer surface of the cylindrical shape, in particular by an outer surface of the heating elements. The outer surface is particularly configured to clampingly engage with the inner surface via the expansion mechanism, which ensures that sufficient friction is established between the outer surface of the device and the inner surface of the shaft. In particular, the outer surface is configured to be directly engaged with an inner surface of the shaft if the expansion mechanism is in expanded state. This expansion mechanism ensures that sufficient friction can be established.

The expansion mechanism may at least partially be formed by an open ended ring, wherein the heating elements are arranged, spaced apart, on an outer surface of said open ring. The space between the outer ends of said open ended ring define the degree of compression for inserting the device in a shaft. It is imaginable a portion of the open ended ring, in particular the outer ends, enclose at least a part of at least one heating element. Hence, it is imaginable that a part of the outer surface of the heating device is formed by a part of the expansion mechanism. Preferably, a portion of the outer surface is formed by an outer surface of a plurality of heating elements. By allowing the heating elements to form part of the outer surface, it may be established that the direct contact between the outer surface of the device and the inner surface of the shaft establishes sufficient thermal contact, when the device is inserted and the expansion mechanism in expanded position, thus eliminating the need a conductive paste between the heating device and the inner surface of the shaft to establish this thermal contact. It is imaginable that, in expanded state of the expansion mechanism, the heating device engages with an inner surface of the shaft under pretension, ensuring sufficient outward pressure to establish thermal contact between the heating elements and inner surface of the shaft.

The at least one heating element of the plurality of interconnected heating elements may be a ceramic heating element, preferably wherein each heating element may be a ceramic heating element. The at least one heating element may comprise a heating filament embedded in ceramic stone. Ceramic heating elements efficiently transfer heat. As such, ceramic heating elements are resistant against burning out, while effectively transforming electrical energy to heat and transferring this heat to the shaft of the conveyor screw. In case of ceramic heating elements, it is preferred that the outer surface of the ceramic elements is in contact with an inner surface of a shaft, at least when the expansion mechanism is in expanded state.

The plurality of interconnected heating elements may comprise at least 5 heating elements, preferably at least 10 heating elements, more preferably 20 to 40 heating elements. A relatively large number of heating elements ensures that a contact area between the heating elements and the shaft is relatively large as well. As such, the rate at which heat is transferred from the heating device and the shaft of the conveyor screw is enhanced. This in turn allows to more effectively control the temperature of the conveyor screw as a response time of a screw conveyor system that comprises the heating device is reduced. In particular, at least one heating element, preferably all heating elements, of the plurality of heating elements comprises an outer surface area that is at least partly complementary to an inner surface area of the shaft. As such, it is ensured that a relatively large part of the outer surface area of each heating element, and a relatively large part of the total outer surface area of the heating device abuts the inner surface area of the shaft within the hollow compartment. This results in an efficient heat transfer between the heating element and the shaft, as the space between each heating element and the inner surface area of the shaft is minimized.

In an embodiment, the heating device comprises a temperature sensor and optionally a controller configured to control a temperature of at least one of the plurality of interconnected heating elements based on a temperature detected by the temperature sensor. This is particularly advantageous to heat conveyed material to a temperature setpoint at a given heating rate. Electricity can be supplied to the heating device based on the current temperature of the heating device, in order to heat the conveyed material at a desired rate, preventing scorching or burning of the conveyed material. In addition, the heating device may comprise multiple temperature sensors. These temperature sensors may also be used to detect the presence of defective heating elements, as a defective heating element will result in a locally decreased temperature at the location of the defective heating element.

In another embodiment, the expansion mechanism comprises a resilient material having an at least partly circular and/or Ω-shape cross section, preferably wherein each heating element of the plurality of interconnected heating elements is attached to an outer surface of the expansion mechanism. An expansion mechanism having an Ω (omega) cross-sectional shape is compressible by pushing the outer ends of this cross sectional shape towards each other. An expansion mechanism having a partly circular or open-ring cross-sectional shape can be compressed similarly. These cross sectional shapes thus allow the heating device switch between a compressed state and an expanded state. Allowing both insertion of the heating device in a shaft of a conveyor screw in the compressed state, and a fixation in place of the heating device in an expanded state. In particular, the curved outer edges of the Ω (omega) cross-sectional shape of the expansion mechanism retain the heating elements that may be circumferentially arranged on the outer surface of the Ω (omega) cross-sectional shaped heating device. As defined herein, a resilient material is a material that returns to its initial form after slight deformation. An example of a resilient material is a thin (approximately 1 mm) metal sheet. Plastics are also commonly resilient, depending on their thickness.

In line with the above, at least one heating element of the plurality of interconnected heating elements and/or the expansion mechanism may have an elongated shape. The expansion mechanism may thus take the shape of a tube-like structure that comprises a slit over its entire length. Outer edges of the tube-like structure present along the slit may be bent around, to from the Ω (omega) shaped cross section. The heating elements may be elongated as well, and aligned substantial parallel to the direction of elongation of the expansion mechanism. The expansion mechanism can as such have a substantial cylindrical shape, with an outer surface area that is complementary to an inner surface area of a shaft of a conveyor screw. In particular, the outer surface area of the heating device is configured for engaging with the inner surface of a hollow compartment of a shaft of a conveyor screw. In particular, the outer surface area of the heating device is configured for engaging clampingly, i.e., based on friction or resilient outwardly exerted force, with the inner surface of the shaft within the hollow compartment. In particular, the outer surface area of the device directly abuts the inner surface area of the shaft within the hollow compartment, at least when the expansion mechanism is in an expanded state. This allows for a fixation of the heating device in place in a shaft of a conveyor screw, when the expansion mechanism is in an expanded state. This results in an efficient heat transfer between the heating device and the shaft, as the space between the heating device and the inner surface area of the shaft is minimized. As a result, the use of heat transfer fluid or thermally conductive medium such as powder or paste can be omitted.

Each heating element of the plurality of interconnected heating elements may have a substantially beam-like shape, comprising an outer surface, an inner surface and two side surfaces, and wherein at least one side surface of a first heating element of the at least two heating elements may be connected to at least one side surface of a second heating element of the at least two heating elements. Advantageously, the heating elements are thus located adjacent to each other, maximizing the surface area of the heating device available for transferring heat from the heating device to the conveyor screw, i.e. maximizing the total of all outer surface areas of the heating elements. In line therewith, an outer circumference of the heating device preferably has an at least partly circular cross sectional shape. This ensures a maximized contact area between the shaft of the conveyor screw, and the heating device. In particular if a hollow compartment, wherein the heating device is placeable, has an at least partly circular cross sectional shape as well.

The heating device may comprise a fixation mechanism located at least partly in the expansion mechanism for increasing a distance between at least two heating elements of the plurality of interconnected heating elements. Advantageously, the increase in distance allows the heating device to remain fixed in place in a location within the hollow compartment of a shaft of a conveyor screw. **If** the heating device has an at least partly circular cross sectional shape, the fixation mechanism allows an increase in distance between heating elements at located at opposite sides of the heating device, and abutting against an inner surface of the shaft in the hollow compartment. As such, an increase in distance between heating elements may result in an increase in diameter of the heating device. This increase in diameter ensures that the heating elements abut the inner surface of the shaft and ensure that the heating device is fixed in placed. Likewise, a distance between two adjacent heating elements, or between multiple adjacent heating elements, can be increased as well. Effectively, this results in an increase in diameter of the heating device with the effect of fixing the heating device in place inside a hollow compartment in the shaft, and this ensures a good contact between the individual heating elements and the inner surface of the shaft.

Additionally or alternatively, the fixation mechanism may comprise a rod and two wedges connected to the rod, wherein each wedge comprises a sharp end and a blunt end, and wherein the two wedges are movable along the rod with their sharp edges directed towards each other. Effectively, pulling two wedges towards each other along a rod, displaces the heating elements and increases a distance between the heating elements. The use of two wedges ensures that the displacement of the heating elements at one outer edge of the heating device is similar to a displacement of the heating elements an another opposite outer edge of the heating device.

In order to further increase the contact surface between the plurality of heating elements and the inner surface of the shaft, provided that this inner surface has a circular cross section, at least a part of the outer surface area of each individual heating element may be somewhat curved. The somewhat curved outer surface area of a heating element ensures that a complementary surface area, where at least part of the outer surface of the heating element and at least part of the inner surface of the shaft abut, is maximized. As such, heat transfer is effectively increased, resulting in a heating device that can be better controlled, as a response time of the heating device is lowered.

In another aspect, the present invention relates to a conveyor screw comprising a spiral blade coiled around a shaft and attached to the shaft, wherein the shaft comprises at least one heating device as described hereinabove, wherein the shaft comprises a hollow compartment and wherein the heating device is located in the hollow compartment. The conveyor screw can as such be electrically heated by the heating device, and the use of heat transfer fluid or thermally conductive medium such as a powder or paste can be omitted. Electric wiring from each heating device to a controller at a location away from the conveyor screw, may be connected via a slip ring, or another coupling that allows an electric connection between a rotating part and a stationary part.

The hollow compartment may comprise at least two subcompartments, wherein each of the at least two subcompartments may be separated from each other with a separating element, and wherein each subcompartment may be configured to hold one heating device of the at least one heating device. The subcompartments separate the heating devices, and as such lower the influence one heating device has on another. If, for example, a first heating device initiates heating of the shaft of the conveyor screw at a location surrounding a first subcompartment, the transfer of this heat to another adjacent subcompartment is lowered due to the separating element. As such, control over the temperature at specific zones of the conveyor screw is enhanced, as individual heating devices have a smaller effect on each other due to their placement in subcompartments.

The separating elements can be present in the shaft prior to placement of the heating devices. In that case, one separating element is present in the shaft, and two heating devices can be inserted in the shaft, one from either end. The separating elements may have a disc-like shape. Orifices in the separating elements may be present to allow electric wiring to pass from one subcompartment to another, through the separating elements. The separating elements can also be inserted after placement of an individual heating device in the shaft. This is particularly advantageous if three or more heating devices are to be placed in the shaft. In addition, alternating placement of heating devices and separating elements is particularly advantageous if the hollow compartment, that is to be divided in subcompartments, is accessible from only one outer end of the shaft.

The separating element may comprise a polymeric material. Optionally, the separating element may have a melting temperature above 500°C, preferably above 600°C, more preferably above 700°C, most preferably above 800°C. A high melting temperature allows for the separating element to withstand a high temperature of the heating device. Preferably, the separating elements may comprise stainless steel. The separating elements may comprise an insulation material or layer. This in turn allows the conveyor screw to be suited for high-temperature applications, such as transporting raw materials intended for pyrolysis. The separating element may comprise a technical polymer, or may consist of a technical polymer. Technical polymers are high molecular weight polymers that have advantageous insulating properties and that are resistant to high temperatures.

In an embodiment, the hollow compartment may have a substantially cylindrical shape, wherein a diameter of the hollow compartment ranges between 110 mm to 510 mm, such as between 110 mm to 210 mm, between 210 mm to 310 mm, between 310 mm to 410 mm, and between 410 mm and 510 mm. In particular, the diameter of the hollow compartment ranges between 110 and 300 mm. As the shape of an outside surface of a shaft of a conveyor screw is typically cylindrical, the most effective usage of space within the shaft of the conveyor screw is that the hollow compartment has a cylindrical shape as well. Conveyor screws can have a length of several meters, and as such, the diameter of the shaft should be large enough to provide sufficient support. In line therewith, the hollow compartment can have a relatively large diameter as well, without a large compromise on strength and structural integrity of the shaft.

In particular, the hollow compartment may comprise an elastic element, such as a coil spring, connected to the at least one heating device and an outer end of the hollow compartment, or optionally wherein the coil spring may be connected to the at least one heating device and the separating element. Advantageously, the elastic element may push against a heating device in a direction parallel to the lengthwise extension of the shaft. As such, the elastic element may push a heating device against a separating element or an outer end of the hollow compartment. A permanent force provided by the elastic element enables the heating device to remain in place in the shaft. The elastic element ensures that one or more heating devices, present in the shaft, do not move within the shaft.

In a third aspect, the present invention relates to a method for inserting a heating device in a conveyor screw, comprising the following steps:
a) providing a heating device as described hereinabove,
b) compressing the heating device such that an outer diameter of the heating device is reduced, to obtain a compressed heating device,
c) providing a conveyor screw comprising a shaft with a hollow compartment,
d) inserting the compressed heating device in the hollow compartment,
e) decompressing the compressed heating device, and optionally
f) fixating the heating device by extending a distance between at least two heating elements of the heating device using the fixation mechanism. This allows convenient insertion and removal of one or more heating devices in a shaft of a conveyor screw. If a heating device, or one or more heating elements of a heating device are malfunctioning, the heating device can be easily replaced.

In a fourth aspect, the present invention may relate to a conveyor screw comprising a spiral blade coiled around a shaft and attached to the shaft, wherein the shaft comprises at least one heating device, wherein the shaft comprises a hollow compartment and wherein the at least one heating device is located in the hollow compartment, wherein the at least one heating device is substantially elongated and is form-fitting within the hollow compartment, and optionally, wherein the at least one heating device is rotatably and electrically connected to a power supply via a slip ring.

The shaft may have an inner diameter ranging from 20 to 40 mm, preferably ranging from 25 to 35 mm. The hollow compartment of the conveyor screw may additionally or alternatively comprise a plurality of hollow subcompartments separated from each other by at least one separating element. Optionally, the at least one heating device comprises at least one ceramic heating element

The present invention will be further elucidated on the basis of the non-limitative exemplary embodiments shown in the following figures. Herein shows:
Figure 1A a schematic cross sectional view of a prior art conveyor screw comprising a helical heating element;
Figure 1B a schematic cross sectional view of a prior art conveyor screw comprising rod-shaped heating elements;
Figure 2 shows a perspective view of a heating device according to the present invention;
Figure 3A shows a cross sectional view of a heating device according to the present invention;
Figure 3B shows a cross sectional view of a part of a heating device in a compressed state;
Figure 3C shows a cross sectional view of a part of a heating device in a decompressed state;
Figure 4A shows a side view of a conveyor screw according to the present invention; and
Figure 4B shows a lengthwise cross sectional view of a conveyor screw according to the present invention.

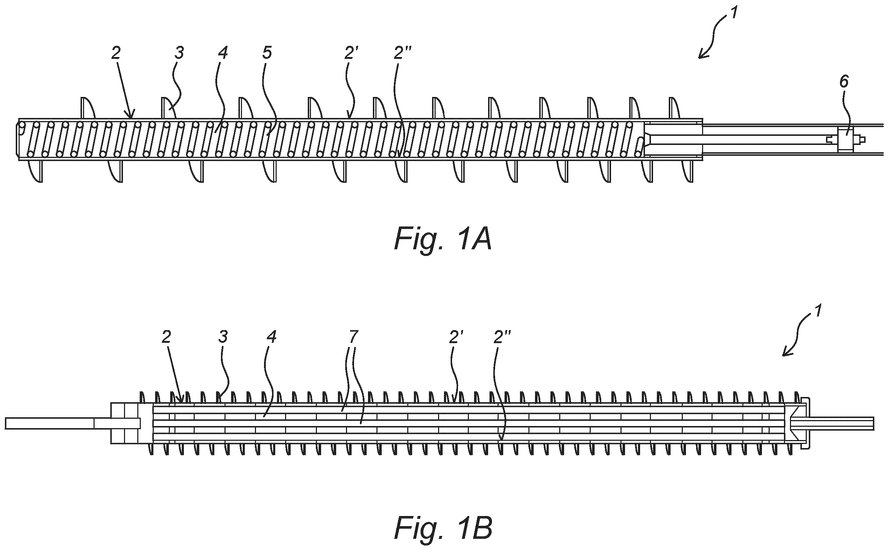

Referring to Figure 1A, a schematic overview of a cross section of a prior art conveyor screw 1 is shown. The conveyor screw 1 comprises a shaft 2 and a helical blade 3 attached to an outer surface 2' of the shaft 2. The shaft 2 has a hollow compartment 4, wherein a helical heating device 5 is located. The helical heating device 5 has a tube shape that abuts the inner surface 2" of the shaft 2. Due to the circular cross sectional shape of the helical heating device 5, a contact area between the helical heating device and the inner surface 2" of the shaft 2 is relatively small. To facilitate and enhance heat transfer between the helical heating device 5 and the shaft 2, thermally conductive paste (not shown) is used and applied throughout the hollow compartment 4, and in particular between the helical heating device 5 and the inner surface 2" of the shaft 2. The helical heating device 5 is supplied with power via a slip ring 6.

Figure 1B shows a schematic overview of a cross section of another prior art conveyor screw 1. This conveyor screw 1 comprises a shaft 2 and a helical blade 3 attached to an outer surface 2' of the shaft 2 as well. The hollow compartment 4 inside the shaft 2 contains a heating device 5 with several rod-shaped heating elements 7. Although the contact area between the rod-shaped heating elements 7 and the inner surface 2" of the shaft is somewhat larger as with the helical heating device 5 as shown in Figure 1A, owing to the circular rod-shaped heating elements 7 being aligned with the circular cross sectional inner surface 2" of the shaft 2, thermally conductive medium (not shown) is still required for adequate heat transfer from the heating elements 7 to the shaft 2. Although in theory individual rod-shaped heating elements 7 can be replaced when broken, the presence of thermally conductive medium, particularly in powder form, prohibits effective replacement of defective heating elements 7.

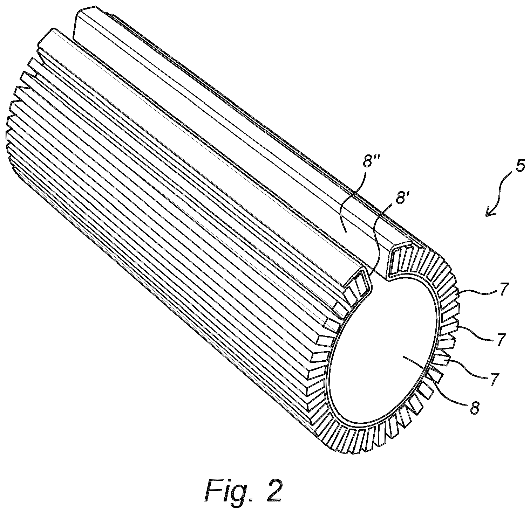

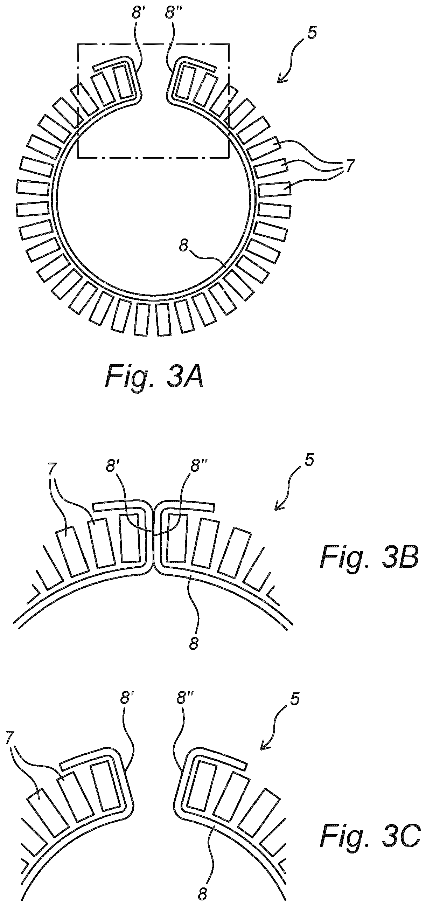

Figure 2 shows a three dimensional perspective view of a heating device 5 according to the present invention. The heating device 5 contains many heating elements 7. The heating elements 7 are each individually connected via an expansion mechanism 8 in the form of a metal sheet 8 that is bent such that the metal sheet 8 has an omega-shaped cross section. Figure 3A shows a cross sectional view of the heating device 5 depicted in Figure 2 in an uncompressed or decompressed state. The curved ends 8' and 8" of the expansion mechanism 8 are located at a distance from each other. Referring now to figure 3B, a boxed part of the expansion mechanism 8 as shown in Figure 3A is shown here in a compressed state, wherein a distance between the curved ends 8' and 8" is minimized, and wherein the curved ends 8' and 8" abut each other. This compression can occur by applying a squeezing force to the heating device 5 by hand. When this force is released, the flexibility of the expansion mechanism 8 ensures that the curved ends 8' and 8" move away from each other and an uncompressed state of the expansion mechanism 8, wherein the curved ends 8' and 8" are located at a distance from each other, is attained. During placing the heating device 5 inside a hollow compartment of a shaft of a conveyor screw, the device is in the compressed state as shown in figure 3B. After correct positioning of the device 5 inside the shaft, the expansion mechanism forces the device 5 towards the expanded state, as shown in figure 3C. This expanded state ensures a fixation of the heating device 5 in place inside the hollow compartment of the shaft of the conveyor screw. In particular, the outside surface area, which in this embodiments is formed partially by the outer surface of the heating elements 7, of the heating device 5 clampingly engages with the inner surface of the hollow compartment of the shaft of the conveyor screw. As a result, the outer surface area of the heating device directly abuts the inner surface area of the shaft within the hollow compartment of the conveyor screw. More in particular, the outer surface is urged against an inner surface of the shaft. This results in an efficient heat transfer between the heating device 5 and the shaft, as the space between the heating device 5 and the inner surface area of the shaft is minimized. As a result, the use of heat transfer fluid or thermally conductive medium such as powder or paste can be omitted.

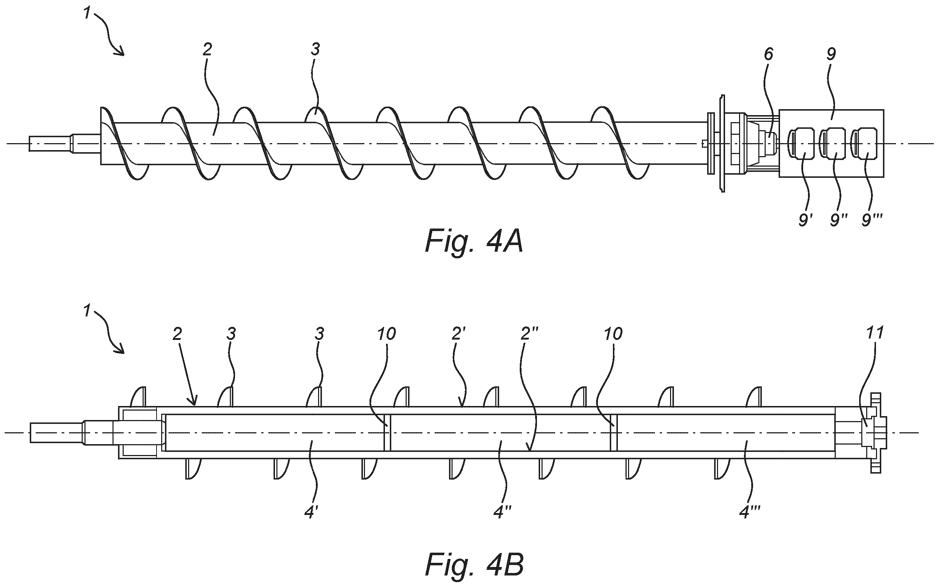

A conveyor screw 1 according to the present invention is schematically shown in Figure 4A. The conveyor screw 1 has a shaft 2 and a helical blade 3 surrounding the shaft 2. The shaft 2 is rotatably and electrically connected via a slip ring 6 to a power supply 9 having three electrical sockets 9', 9", 9‴ for power supply to three heating devices 5 (not visible) in the shaft 2. A schematic lengthwise cross section of the conveyor screw 1 shown in Figure 4A is given in Figure 4B. Here, the hollow compartment 4 is subdivided with separating elements 10 in the form of stainless steel discs 10 into three subcompartments 4', 4", and 4'". One heating device 5 is placeable in a subcompartment 4', 4", 4'". A total of three heating devices 5 can be located within the shaft 2 of the conveyor 1. Each of these heating devices 5 is connected to one of the three electrical sockets 9', 9", and 9"'. As such, a power supply can be regulated based on the desired temperature of the hollow subcompartments 4', 4", and 4‴.

An elastic element 11 in the form of a coil spring 11 is present at an outer end of the hollow subcompartment 4‴. This coil spring 11 ensures that the any heating device 5 (not shown) present in hollow subcompartment 4‴ stays in place and does not shift in a lengthwise direction of the shaft 2 within the hollow compartment 4.

## Claims

1. Heating device for placement in a central shaft of a conveyor screw,
**characterized in that,**
the heating device has an at least partly cylindrical shape and comprises:
- a plurality of interconnected heating elements, arranged at an outer circumferential surface of the heating device; and
- an expansion mechanism, connected to at least two heating elements of the plurality of interconnected heating and located in between the at least two heating elements, and
wherein the expansion mechanism is configured to increase a distance between the at least two heating elements.

2. Heating device according to claim 1, **characterized in that,** at least one heating element of the plurality of interconnected heating elements is a ceramic heating element, preferably wherein each heating element is a ceramic heating element.

3. Heating device according to claim 1 or claim 2, **characterized in that,** the plurality of interconnected heating elements comprises at least 5 heating elements, preferably at least 10 heating elements, more preferably 20 to 40 heating elements.

4. Heating device according to any one of claims 1 - 3, **characterized in that** the heating device comprises a temperature sensor and optionally a controller configured to control a temperature of at least one of the plurality of interconnected heating elements based on a temperature detected by the temperature sensor.

5. Heating device according to any one of claims 1 - 4, **characterized in that** the expansion mechanism comprises a resilient material having an at least partly circular and/or Ω-shape cross section, preferably wherein each heating element of the plurality of interconnected heating elements is attached to an outer surface of the expansion mechanism.

6. Heating device according to any one of claims 1 - 5, **characterized in that** at least one heating element of the plurality of interconnected heating elements and/or the expansion mechanism has an elongated shape.

7. Heating device according to claim 6, **characterized in that** each heating element of the plurality of interconnected heating elements has a substantially beam-like shape, comprising an outer surface, an inner surface and two side surfaces, and
wherein at least one side surface of a first heating element of the at least two heating elements is connected to at least one side surface of a second heating element of the at least two heating elements.

8. Heating device according to any one of claims 1 - 7, **characterized in that** an outer circumference of the heating device has an at least partly circular cross sectional shape.

9. Heating device according to any one of claims 1 - 8, **characterized in that** the heating device comprises a fixation mechanism located at least partly in the expansion mechanism for increasing a distance between at least two heating elements of the plurality of interconnected heating elements,
preferably, wherein the fixation mechanism comprises a rod and two wedges connected to the rod, wherein each wedge comprises a sharp end and a blunt end, and wherein the two wedges are movable along the rod with their sharp edges directed towards each other.

10. Conveyor screw comprising a spiral blade coiled around a shaft and attached to the shaft, **characterized in that** the shaft comprises at least one heating device according to any one of claims 1 - 9, wherein the shaft comprises a hollow compartment and wherein the heating device is located in the hollow compartment.

11. Conveyor screw according to claim 10, **characterized in that** the hollow compartment comprises at least two subcompartments, wherein each of the at least two subcompartments are separated from each other with a separating element, and wherein each subcompartment is configured to hold one heating device of the at least one heating device.

12. Conveyor screw according to claim 11, **characterized in that** the separating element comprises a polymeric material, wherein the separating element has a melting temperature above 500°C, preferably above 600°C, more preferably above 700°C, most preferably above 800°C.

13. Conveyor screw according to any one of claims 10 - 12, **characterized in that** the hollow compartment has a substantially cylindrical shape, wherein a diameter of the hollow compartment ranges between 110 mm to 510 mm, such as between 110 mm to 210 mm, between 210 mm to 310 mm, between 310 mm to 410 mm, and between 410 mm and 510 mm.

14. Conveyor screw according to any one of claims 10 - 13, **characterized in that** the hollow compartment comprises an elastic element, such as a coil spring, connected to the at least one heating device and an outer end of the hollow compartment, or wherein the coil spring is connected to the at least one heating device and the separating element.

15. Method for inserting a heating device in a conveyor screw, **characterized by** comprising the following steps:
a) providing a heating device according to any one of claims 1 - 9,
b) compressing the heating device such that an outer diameter of the heating device is reduced, to obtain a compressed heating device,
c) providing a conveyor screw comprising a shaft with a hollow compartment,
d) inserting the compressed heating device in the hollow compartment,
e) decompressing the compressed heating device, and optionally
f) fixating the heating device by extending a distance between at least two heating elements of the heating device using the fixation mechanism.
